# FASCICULE DE BREVET EUROPEEN

(11) **EP 1 490 299 B1**
(45) Date de publication et mention de la délivrance du brevet: **26.11.2008**
(21) Numéro de dépôt: 03704116.7
(22) Date de dépôt: 12.02.2003
(51) Int. Cl.: C01B 31/04, H01M 4/58

(54) **PROCEDE DE PURIFICATION EN SURFACE D'UN GRAPHITE CONTENANT DES IMPURETES A L'AIDE D'UNE SOLUTION AQUEUSE DILUEE DE NH4F ET DE H2SO4**
VERFAHREN ZUR OBERFLÄCHENREINIGUNG VON VERUNREINIGUNGEN ENTHALTENDEM GRAPHIT MITTELS EINER NH4F UND H2SO4 ENTHALTENDEN WÄSSRIGEN LÖSUNG
METHOD FOR THE SURFACE PURIFICATION OF A GRAPHITE CONTAINING IMPURITIES USING A DILUTE AQUEOUS SOLUTION OF NH4F AND H2SO4

(30) Priorité: 01.03.2002 CA 2374132
(43) Date de publication de la demande: 29.12.2004
(73) Titulaire: HYDRO QUEBEC, Montréal H2Z 1A4, Québec (CA)
(72) Inventeur: ZAGHIB, Karim, Longueuil, Québec J4M 2M7 (CA); GUERFI, Abdelbast, Brossard, Québec J4X 1W2 (CA); ARMAND, Michel, Montréal, Québec H3T 1N2 (CA); GAGNON, Claude, Val-Bélair, Québec G3K 2H9 (CA); KINOSHITA, Kimio, Cupertino, CA 95014 (US)
(74) Mandataire: Sueur, Yvette
(86) Numéro de dépôt international: PCT/CA2003/000209
(87) Numéro de publication internationale: WO 2003/074419

(56) Documents cités:
- WO-A-01/62666
- WO-A-02/34670
- CA-A- 2 299 626
- CA-A- 2 307 118
- DE-C- 125 304

## Description

### DOMAINE DE L'INVENTION

La présente invention a pour objet un procédé particulièrement efficace de purification de la surface de particules de graphite et plus particulièrement de la surface de particules de graphite naturel. Ce procédé, qui permet l'élimination des impuretés telles que Si, Ca, S, Fe présentes dans le graphite naturel, à des concentrations variant suivant la source d'approvisionnement, comprend une étape de traitement des particules de graphite à l'aide d'une solution diluée de (H₂SO₄ et NH₄F), dans des conditions réactionnelles économiques. Ce traitement peut être précédé par une étape de traitement mécanique. L'étape de traitement mécanique consiste en une étape de broyage des particules de graphite naturel jusqu'à obtenir des particules ayant une répartition granulométrique prédéterminée. Les particules de graphite ainsi purifiées en surface sont utilisables notamment dans la préparation d'électrode à base de carbone-lithium.

### ART ANTÉRIEUR

L'électrode négative à base de carbone-lithium a récemment suscité un grand intérêt tant dans la communauté scientifique qu'industrielle. En effet, l'utilisation d'une telle électrode dans une batterie rechargeable permet de résoudre le problème crucial posé par l'électrode au lithium métallique qui se recharge mal dans les électrolytes liquides à cause de la croissance de dendrites lorsque la densité de charge (C/cm²) et/ou la densité de courant (mA/cm²) dépassent les valeurs limites qui conditionnent le bon fonctionnement de la batterie. Ce problème majeur a retardé l'apparition des batteries au lithium de formats classiques (AA, C, D, etc.) destinées au grand public. La première pile de ce type a été commercialisée au début des années 90 par Sony Energytech. Cette pile est dite lithium-ion et comprend une électrode négative constituée de carbone-lithium.

Le principe de fonctionnement de cette électrode repose sur la réversibilité de l'insertion du lithium entre les couches de carbone. Ces couches sont caractérisées par une très forte anisotropie des forces de liaison carbone-carbone à l'intérieur des couches (covalentes très fortes) et entre les couches (très faibles de type Van der Waals). De ce fait, puisque le lithium est un cation de très faible taille, il peut diffuser rapidement entre les couches 2D en formant avec elles des liaisons de type ioniques n'entraînant pas de modifications irréversibles des liaisons à l'intérieur des couches. Seul un léger écartement entre les couches est observé, permettant ainsi d'accommoder le lithium inséré.

Il est bien connu que la réversibilité de l'insertion électrochimique du lithium dans le carbone est d'autant plus favorable que le cation Li⁺ est dépourvu de sa sphère de solvatation lors de son transfert depuis la solution électrolytique vers l'intérieur du carbone solide. Ainsi, la co-insertion du DMSO et du DME entraîne un écartement plus important des plans (> 300%) contribuant ainsi à une plus grande désorganisation de la structure hôte. Le lithium ainsi inséré possède, en outre, une masse et un volume apparents plus importants, ce qui réduit sa mobilité ainsi que sa concentration maximale à l'intérieur des plans. Par ailleurs, en milieu carbonate de propylène, le composé ternaire est très instable, le solvant se réduisant en propène gazeux pouvant entraîner une dégradation violente de la batterie.

Plus récemment, il a été montré que des carbones à cristallinité imparfaite (turbostratiques) pouvaient insérer le lithium en milieu PC ou PC-DME sans co-intercalation du solvant. La différence de comportement électrochimique d'un graphite de haute cristallinité et d'un carbone mal cristallisé tel le coke traité à une température inférieure à 1800°C, pourrait provenir d'une surtension de dégagement du propène plus importante pour le coke. Cependant, une première étape de décharge résulte en la formation d'un film protecteur à la surface des grains de carbone, produit de la décomposition du solvant. Une fois formé, ce film a une impédance suffisante pour empêcher le transfert d'électron nécessaire à la progression de la réduction du solvant. Mais, il est cependant conducteur par les ions Li⁺ et se comporte de ce fait comme un électrolyte solide. Il est aussi fort probable que ce film intervient dans la dé-solvatation de l'ion Li⁺ au cours de son transfert et/ou sa réduction à la surface du carbone.

L'électricité consommée lors de cette étape ne peut être restituée lorsque le courant est inversé. Le rendement faradique du 1^{er} cycle est par conséquent faible. La capacité réversible mesurée lors des cycles suivants est directement liée à la nature du carbone et du traitement qu'il a subi ainsi qu'à la nature de l'électrolyte.

Le brevet US-A-5, 882, 818 se penche sur les graphites de 1-40 µm. Cette étude se base sur la relation entre la structure et l'électrochimie. Cependant, on ne retrouve aucune information ayant trait à la pureté de la poudre de graphite, ou encore son procédé d'obtention.

Le brevet US-A-5.756.062 discute de la modification de la surface d'un graphite hautement purifié. Le graphite utilisé n'est toutefois pas un graphite brut obtenu directement du minerai. La modification chimique du graphite est élaborée par des traitements à base de fluor, chlore ou phosphore.

Le graphite utilisé conventionnellement comme matériau d'électrode dans une pile lithium-ion est généralement obtenu de 2 sources distinctes, à savoir du graphite synthétique, ou encore du graphite naturel hautement purifié thermiquement, préférablement à des températures supérieures à 2.500°C. Un tel graphite, bien que d'excellente qualité, est cependant extrêmement coûteux, ce qui a une incidence directe sur le produit final éventuellement vendu sur le marché. De plus, le graphite n'est réduit à l'état de poudre qu'après avoir été purifié ou synthétisé, ce qui cause certains problèmes lors du procédé de broyage. En effet, l'homogénéité de la distribution de grosseur des particules dans la poudre est grandement altérée, puisque le graphite à l'état pur est très fragile. En fait, on peut parler de distribution relativement non-homogène. Si une pile est fabriquée directement avec un graphite ayant une telle distribution non-homogène, il est clair que sa durée de vie sera grandement réduite. L'alternative est alors de filtrer fin de ne retenir que les particules ayant la grosseur souhaitée, ce qui entraîne des étapes additionnelles au procédé, et ultimement, une augmentation du coût du matériau qui en résulte.

Dans la demande internationale de brevet PCT/CA 01/00233, il a récemment été proposé un procédé permettant la purification notamment en surface de particules de graphite par mise en oeuvre d'un procédé comportant au moins une étape de broyage du graphite jusqu'à obtenir une granulométrie comprise entre 1 et 50 µm, suivie d'une étape de purification des particules obtenues par voie chimique de préférence par mise en oeuvre d'un traitement acide avec de préférence HF ou un dérivé fluoré permettant la génération de HF dans le milieu et/ou thermique à des températures typiquement comprises entre 1.000 et 3.100 °C. Ce procédé bien que présentant des avantages importants par rapport aux procédés antérieurs recommande, comme illustré par les modes de réalisations rapportés dans la demande de brevet PCT/CA 01/00233, la mise en oeuvre de quantités importantes d'un réactif acide. Ces quantités, exprimées en poids, sont au moins 3 fois supérieures à celle des particules de graphite à traiter. Ce procédé est associé avec des coûts d'exploitation relativement élevés et des risques de dégradation de la structure interne des particules de graphite, comme il s'en produit lors d'une exfoliation.

Il existait donc un besoin pour la mise à disposition d'un procédé permettant la purification en surface de particules de graphite dans des conditions économiques d'exploitation et sans endommager la structure initiale du graphite. Dans une mise en oeuvre préférentielle, le procédé devrait permettre l'obtention d'une poudre de graphite d'une distribution granulométrique relativement homogène.

### SOMMAIRE DE L'INVENTION

La présente invention est relative à un procédé pour la préparation de particules de graphite purifiées en surface à partir de particules de graphite. Ce procédé comporte au moins une étape de traitement des particules de graphite à une température comprise entre la température ambiante et 95°C, pendant une durée de 5 minutes à 6 heures, à l'aide d'une solution aqueuse diluée de (H₂SO₄ et NH₄F) dans laquelle la teneur totale en poids de (H₂SO₄ et NH₄F) représente de 5 à 30% de la masse totale de la solution aqueuse diluée, et la quantité de solution aqueuse diluée de (H₂SO₄ et de NH₄F) utilisée pour le traitement représente de 70 à 95 % en poids de la masse totale des particules de graphite soumises à purification.

### BRÈVE DESCRIPTION DES FIGURES

La Figure 1/5 représente le montage expérimental utilisé pour réaliser le traitement de purification conformément à un mode de réalisation de la présente demande.
La Figure 2/5 représente la distribution granulométrique réalisée sur le graphite impur dont le traitement est décrit dans l'exemple A ci-après.
La Figure 3/5 représente la distribution granulométrique réalisée sur le graphite purifié obtenu à la fin du traitement décrit dans l'exemple A ci-après.
La Figure 4/5 représente la distribution granulométrique réalisée sur le graphite impur dont le traitement est décrit dans l'exemple B ci-après.
La Figure 5/5 représente la distribution granulométrique réalisée sur le graphite purifié obtenu à la fin du traitement décrit dans l'exemple B ci-après.

### DESCRIPTION DÉTAILLÉE DE L'INVENTION

Un premier objet de la présente invention est constitué par un procédé de préparation de particules de graphite purifiées en surface à partir de particules de graphite (de préférence de graphite naturel) comportant des impuretés, d'une taille se situant de préférence entre environ 1 et 375 µm, plus préférentiellement encore entre 1 et 50 µm, ledit procédé comportant au moins une étape de traitement desdites particules de graphite à une température comprise entre la température ambiante et 95°C, de préférence à une température comprise entre 40 et 90 °C, plus préférentiellement encore à une température d'environ 60 °C, pendant une durée de 5 minutes à 6 heures, de préférence pendant une durée de 10 minutes à 4 heures, à l'aide d'une solution aqueuse diluée de (H₂SO₄ et NH₄F), H₂SO₄ et NH₄F étant chacun présent dans la solution aqueuse diluée à une teneur en poids représentant de 5 à 30% de la masse totale de la solution aqueuse diluée, la quantité de solution aqueuse diluée représentant de 70 à 95 % en poids, de préférence de 80 à 90 % du poids des particules de graphite soumises à purification, ledit traitement étant de préférence réalisé dans un réacteur, avantageusement en présence d'une agitation mécanique de préférence de type planetary mixer, et la solution aqueuse diluée de (H₂SO₄ et NH₄F) étant de préférence introduite dans le milieu réactionnel en même temps que les particules de graphite soumises à purification.

Un deuxième objet de la présente invention est constitué par un procédé de préparation de particules de graphite purifiées en surface à partir de particules de graphite (de préférence de graphite naturel) d'une taille se situant de préférence entre environ 1 et 375 µm, plus préférentiellement encore entre 1 et 50 µm, ledit procédé comportant:
- a) une étape de préparation, de préférence à température ambiante et sous agitation de préférence mécanique, d'un mélange réactionnel contenant lesdites particules de graphite (de préférence de graphite naturel), du NH₄F, du H₂SO₄ (de préférence à 96 %) et de l'eau, H₂SO₄ et NH₄F étant chacun présent dans la solution aqueuse diluée de (H₂SO₄ et NH₄F) formée à une teneur en poids de 5 à 30%, la quantité de solution aqueuse diluée représentant de 70 à 95 % en poids, de préférence de 80 à 90 % du poids desdites particules de graphite;
- b) au moins une étape de traitement du mélange préparé dans l'étape a) à une température comprise entre la température ambiante et 95 °C, de préférence à une température comprise entre 40 et 90 °C, pendant une durée de 5 minutes à 6 heures, de préférence pendant une durée de 10 minutes à 4 heures, à l'aide de la solution aqueuse diluée de (H₂SO₄ et NH₄F), ledit traitement étant de préférence réalisé en présence d'une agitation mécanique qui est de préférence de type planetary mixer;
- c) une étape de séparation, de préférence par filtration, de la phase liquide et de la phase solide contenues dans le mélange traité obtenu dans l'étape b);
- d) une étape de lavage de la phase solide récupérée dans l'étape c) à l'aide d'un solvant, de préférence à l'aide d'un solvant aqueux qui est préférentiellement l'eau;
- e) une étape d'élimination des impuretés extraites de la surface du graphite présentes dans la phase liquide récupérée dans l'étape c) et/ou dans la solution de lavage récupérée dans l'étape d); et
- f) une étape optionnelle de recyclage de la phase liquide purifiée récupérée dans l'étape e), préférentiellement après enrichissement en H₂SO₄ et en NH₄F, dans l'étape a) et/ou dans l'étape b) dudit procédé.

Selon un mode avantageux de réalisation des procédés de l'invention, les particules de graphite soumises à purification sont obtenues par broyage d'un graphite jusqu'à l'obtention de particules d'une taille se situant entre environ 1 et 50 µm.

La teneur totale en poids de (H₂SO₄ et NH₄F) de la solution aqueuse diluée de (H₂SO₄ et NH₄F) utilisée représente de 5 à 30 % de de la masse totale de la solution diluée, elle est ajoutée de préférence au début du traitement de purification, sous agitation mécanique, le mélange résiduaire acide est neutralisé de préférence in situ, de préférence par NaOH ou par dilution complète à l'aide de H₂O, et la température est de préférence maintenue constante durant la mise en oeuvre du procédé.

Selon un mode avantageux, la structure cristallographique du graphite est inchangée avant et après lixiviation comme l'atteste notamment un contrôle des paramètres cristallographiques L_{c} et Lₐ du graphite réalisé respectivement par diffraction X et par spectroscopie Raman.

Les graphites qui sont avantageusement utilisés, seuls ou en mélange, dans le cadre des procédés de l'invention sont:
- le graphite de type StratminGraphite (Canada), riche en calcium;
- le graphite de type chinois, riche en silicium;
- le graphite de type Lac Knife (Canada), riche en soufre; et
- le graphite de type brésilien, riche en impuretés de type fer et toute source mondiale.

Selon un autre mode avantageux de réalisation, les étapes (a) et (b) sont effectuées dans des conditions propres à donner des particules de graphite ayant une ou plusieurs des propriétés additionnelles suivantes:
- une distance interplanaire d₀₀₂ mesurée par rayons-X, variant entre 3,35Å et 3,38Å;
- une surface spécifique variant entre 0,4 et 55 m²/g; et
- un taux de pureté mesuré par rétrodiffusion avec les électrons secondaires variant entre 98,5% et 99,99%.

La purification est préférentiellement effectuée dans un bain de préférence dans un bain aqueux.

Selon une variante avantageuse, les particules de graphite purifiées obtenues au cours dudit procédé sont, dans une étape supplémentaire, conditionnées sous forme d'une anode de carbone pour générateur électrochimique rechargeable comprenant un métal alcalin ou alcalino-terreux. De préférence, le métal est le lithium.

L'anode peut avantageusement être préparée en mélangeant les particules de graphite avec un liant et avec un solvant, puis en épandant le mélange obtenu sur un collecteur métallique.

La purification, quant à elle, s'effectue de façon à éliminer lesdites impuretés et les sites de corrosion en surface seulement.

De préférence, un acide oxydant qui est de préférence de type HNO₃ est ajouté dans le milieu réactionnel pour obtenir du graphite exfolié et purifié (en surface) dans une seule étape.

Dans le cadre de la mise en oeuvre de ce procédé, H₂SO₄ est présent dans la solution aqueuse diluée de (H₂SO₄ et NH₄F) à raison d'au moins 80 % en poids de la masse totale de (H₂SO₄ et NH₄F) et NH₄F est présent dans la solution aqueuse diluée de (H₂SO₄ et NH₄F) à raison d'au plus 20 % en poids de la masse totale de (H₂SO₄ et NH₄F).

De façon encore plus avantageuse, le gradient température/temps, au cours du traitement, est compris entre 10 et 90°C par heure.

Le procédé de la présente invention permet d'obtenir des particules de graphite naturel non purifié d'une taille comprise entre 1 et 50 µm environ et dont les surfaces ne comportent aucune impureté et aucun site de corrosion,

Des anodes de carbone peuvent être élaborées à partir de particules de graphite susceptibles d'être obtenues par un des procédés de l'invention.

Les anodes préférentielles sont celles obtenues par l'intermédiaire de particules de graphite naturel broyées et purifiées comprenant au moins une des propriétés additionnelles suivantes:
- une distance interplanaire d₀₀₂ obtenue par Rayons-X variant entre 3,35 et 3,38 ;
- une surface spécifique variant entre 0,4 et 55 m²/g; et
- un taux de pureté de surface mesurée par rétrodiffusion avec les électrons secondaires variant entre 98,5% et 99,99%.

Les anodes précitées peuvent être utilisées dans les piles électrochimiques.

Parmi les piles particulièrement performantes, on peut mentionner celles de type lithium-ion.

La présente invention qui est relative à un nouveau procédé de purification de la surface des particules de graphite constitue un perfectionnement du procédé décrit de façon générique dans la demande PCT/CA 01/00233.

Alors que la demande PCT/CA 01/00233 illustre la mise en oeuvre de la méthode de purification du graphite par la mise en oeuvre de conditions énergétiques et réactionnelles fortes, à savoir une température de traitement de l'ordre de 90 à 250°C et une durée de traitement acide d'au moins 180 minutes, il a été trouvé de façon surprenante que la sélection de certains paramètres opératoires différents de ceux préalablement identifiés comme préférentiels permettait d'obtenir de meilleurs rendements de purification, et qui plus est, dans des conditions économiques plus intéressantes.

Une nouvelle méthode a ainsi été élaborée pour produire du graphite purifié sous forme de petites particules utilisables dans une pile électrochimique, par exemple de type lithium-ion, tout en ayant une distribution de grosseurs relativement homogène. Un tel graphite peut également être utilisé dans d'autres types d'applications comme conducteur électronique dans une cathode (piles) ou dans des piles à combustion dans le domaine nucléaire.

La présente invention concerne une méthode de purification chimique des impuretés se trouvant sur la surface d'un graphite impur tel qu'un graphite naturel, là où sera formé le film de passivation. La présente méthode permet de retirer les impuretés qui sont susceptibles de nuire à la formation du film de passivation et au cyclage de l'anode de carbone-lithium. Le procédé de broyage est réalisé avant purification car il permet d'obtenir un meilleur contrôle de la taille et de la distribution des particules, d'où une poudre plus homogène ne nécessitant pas de filtration pour retirer des particules trop grosses ou trop petites.

L'étape subséquente de purification vise essentiellement à retirer de la surface des particules de graphite les impuretés qui génèrent une conductivité électronique, tels que les composés comprenant du silicium et du fer. Ces composés causent également le dopage ou la réduction par le lithium des composés qui le contiennent.

Ces phénomènes ne doivent absolument pas être présents, ou au moins fortement minimisés, dans le film de passivation qui sera formé à la surface de l'électrode, car ils entraîneront une dégradation de l'efficacité de la pile, et ultimement un court-circuit. Par contre, la présence en surface d'impuretés favorisant la conductivité ionique, tel que le fluorure de calcium, n'influence pas négativement les performances de l'électrode de graphite à cause de son fort caractère ionique peu favorable à une conductivité de nature électronique.

Les impuretés présentes dans un minerai de graphite sont généralement les suivantes (par ordre décroissant) : Si > Ca > Fe > Mg > S > Al. Tel que mentionné précédemment, les composés comprenant du silicium doivent être éliminés car d'une part, le lithium réduit ou dope les composés comprenant du silicium (par exemple SiO₂, SiO et Si métal), et d'autre part, les composés de silicium sont des conducteurs électroniques. Cette dernière propriété est totalement incompatible avec les propriétés du film de passivation, qui représente un élément-clé d'une bonne anode carbone-lithium caractérisée par une longue durée de vie.

Un premier mode de réalisation de l'invention consiste en un procédé de préparation de particules de graphite purifiées en surface à partir de particules de graphite (de préférence de graphite naturel) comportant des impuretés, d'une taille se situant de préférence entre environ 1 et 375 µm, plus préférentiellement encore entre 1 et 50 µm. Ce procédé comporte au moins une étape de traitement desdites particules de graphite à une température comprise entre la température ambiante et 95°C, de préférence à une température comprise entre 40 et 90 °C, plus préférentiellement encore d'environ 60°C, pendant une durée de 5 minutes à 6 heures, de préférence pendant une durée de 10 minutes à 4 heures, à l'aide d'une solution aqueuse diluée de (H₂SO₄ et NH₄F), H₂SO₄ et NH₄F étant chacun présent dans la solution aqueuse diluée à une teneur en poids représentant de 5 à 30% de la masse totale de la solution aqueuse diluée, la quantité de solution aqueuse diluée représentant de 70 à 95 % en poids, de préférence de 80 à 90 % du poids des particules de graphite soumises à purification, ledit traitement étant de préférence réalisé dans un réacteur, avantageusement en présence d'une agitation mécanique de préférence de type planetary mixer, et la solution aqueuse diluée de (H₂SO₄ et NH₄F) est de préférence introduite dans le milieu réactionnel en même temps que les particules de graphite soumises à purification.

Un deuxième mode préférentiel de réalisation de la présente invention est constitué par un procédé de préparation de particules de graphite purifiées en surface à partir de particules de graphite (de préférence de graphite naturel) comportant des impuretés, d'une taille se situant de préférence entre environ 1 et 375 µm, plus préférentiellement encore entre 1 et 50 µm, ledit procédé comportant :
- a) une étape de préparation, de préférence à température ambiante et sous agitation de préférence mécanique, d'un mélange réactionnel contenant lesdites particules de graphite (de préférence de graphite naturel), du NH₄F, du H₂SO₄ (de préférence à 96 %) et de l'eau, H₂SO₄ et NH₄F étant chacun présent dans la solution aqueuse diluée de (H₂SO₄ et NH₄F) formée à une teneur en poids de 5 à 30%, la quantité de solution aqueuse diluée représentant de 70 à 95 % en poids, de préférence de 80 à 90 % du poids desdites particules de graphite;
- b) au moins une étape de traitement du mélange préparé dans l'étape a) à une température comprise entre la température ambiante et 95 °C, de préférence à une température comprise entre 40 et 90 °C, plus préférentiellement encore à une température d'environ 60 °C, pendant une durée de 5 minutes à 6 heures, de préférence pendant une durée de 10 minutes à 4 heures, à l'aide de la solution aqueuse diluée de (H₂SO₄ et NH₄F) formée, ledit traitement étant de préférence réalisé en présence d'une agitation mécanique qui est de préférence de type planetary mixer ;
- c) une étape de séparation, de préférence par filtration, de la phase liquide et de la phase solide contenues dans le mélange traité obtenu dans l'étape b);
- d) une étape de lavage de la phase solide récupérée dans l'étape c) à l'aide d'un solvant, de préférence à l'aide d'un solvant aqueux qui est préférentiellement l'eau;
- e) une étape d'élimination des impuretés extraites de la surface du graphite présentes dans la phase liquide récupérée dans l'étape c) et/ou dans la solution de lavage récupérée dans l'étape d) ;
- f) une étape de recyclage de la phase liquide purifiée récupérée dans l'étape e), préférentiellement après enrichissement en H₂SO₄ et en NH₄F, dans l'étape a) et/ou dans l'étape b) dudit procédé.

De façon préférentielle, H₂SO₄ est présent dans la solution aqueuse diluée de (H₂SO₄ et NH₄F) à raison d'au moins 80 % en poids de la masse totale de (H₂SO₄ et NH₄F) et NH₄F est présent dans la solution aqueuse à raison d'au plus 20 % en poids de la masse totale de (H₂SO₄ et NH₄F).

La présente méthode de purification ne modifie pas la taille des grains telle que déterminée par le procédé de broyage. Il n'y a donc pas d'agglomération des particules. Ces particules sont donc libres et forment ainsi un mélange homogène avec le liant afin d'obtenir une électrode de bonne qualité (rugosité, épaisseur, porosité etc.).

L'étape de broyage peut se faire selon n'importe quelle technique connue de la personne du métier. De telles techniques incluent notamment le broyage par jets ("jet milling"), le broyage par air ("air milling") et le broyage par billes ("ball milling").

Les exemples suivants sont fournis afin de mettre en évidence les performances et avantages du procédé de la présente invention, notamment par rapport au procédé décrit dans la demande PCT/CA 01/00233. Ils ne sauraient aucunement être interprétés comme apportant une quelconque limitation à la portée de l'objet de la présente invention.

**EXEMPLE SELON LE PROCÉDÉ DÉCRIT DANS** PCT/CA 01/00233

### Exemple 1

30 grammes d'un graphite naturel StratminGraphite (Lac des îles - Québec) ayant des particules de taille initiale de 375 µm sont broyés par un procédé "*air-milling*" jusqu'à ce que les particules atteignent une grosseur de 10 µm. La taille moyenne des particules obtenue (D50%) est de 10,52 µm. La distribution gaussienne du graphite a un seul maximum sans aucun épaulement. La distribution granulométrique a été déterminée à l'aide de l'analyseur de particules Microtrac^{™} fabriqué et vendu par Leeds & Northrul. Le méthanol a été utilisé comme liquide porteur. Subséquemment, le graphite broyé est lixivié dans un réacteur rempli de 106,5 ml d'un bain aqueux de HF 30%. La température du mélange est fixée à 90°C, et le temps de lixiviation est de 180 minutes. Le graphite est ensuite filtré, lavé à grande eau, et la poudre est séchée pendant 24 heures à 120°C.

La poudre de graphite obtenue est analysée en rétrodiffusion couplée avec le EDX. Aucune exfoliation des particules n'a été observée. Par ailleurs, l'analyse par EDX montre que la majorité des impuretés restantes est constituée de calcium. La pureté de cet échantillon est de 99.6%, tel qu'obtenu par la méthode d'analyse des cendres résiduelles des impuretés.

### Ce graphite est mélangé avec le liant polyvinylidène fluoré (PVDF) (Kruha :

KF-1700) et la n-méthyl pyrolidone dans un ratio massique 90:10. Ce mélange est appliqué sur un collecteur de cuivre par la méthode Doctor Blade^{™}.

L'électrode de graphite ainsi obtenue est séchée sous vide à 120°C pendant 24 heures puis montée dans une pile bouton de type 2035. Un séparateur Celgard^{™} 2300 imbibé d'électrolyte 1M LiPF₆ + EC/DMC : 50/50 (carbonate d'éthylène + diméthylcarbonate) est utilisé. Le lithium métallique est utilisé comme référence et comme contre-électrode.

Les tests électrochimiques ont été conduits à la température ambiante. Les courbes de décharge - charge ont été obtenues entre 0 et 2.5 Volts en C/24. Le premier rendement coulombique est de 85%, ce qui est supérieur au graphite commercial utilisé dans les batteries lithium-ion (typiquement 81%). La capacité réversible est de 365 mAh/g équivalent à x = 0.98 dans LiₓC₆. Cette valeur obtenue est très proche de la valeur théorique du graphite (372 mAh/g). On ne constate aucun effet négatif associé à la présence des impuretés résiduelles de Ca.

### Exemple 2

30 grammes d'un graphite naturel StratminGraphite (Lac des îles - Québec) ayant des particules de taille initiale de 375 µm sont broyés par un procédé "air-milling" jusqu'à ce que les particules atteignent une grosseur de 10 µm. Le graphite est ensuite lixivié dans un bain constitué de 106,5 ml d'un mélange aqueux comprenant 30% H₂S0₄ et 30% HF. Puis, 106,5 ml du mélange d'acide est chauffé à 90°C et 30 g de graphite sont alors ajoutés dans la solution. Le graphite est lixivié pendant 180 minutes dans le réacteur. Le solide est ensuite filtré, lavé à grande eau, et séché à 120°C pendant 24 heures. La taille (D50%) des particules obtenues est de 10,92 mm, et ce avant et après purification. La distribution gaussienne du graphite présente un seul maximum, sans aucun épaulement.

L'analyse des impuretés de ce graphite par EDX montre la présence majoritaire des éléments Ca et F. L'analyse des cendres résiduelles des impuretés présentes dans et à la surface du graphite montre une pureté de 99.68%. La préparation de l'électrode et les tests électrochimiques se font conformément à la procédure décrite dans l'exemple 1.

L'efficacité coulombique du premier cycle est de 90%. Le plateau irréversible du film de passivation est formé normalement vers 800 mV. Ceci veut dire que les éléments Ca, F ou CaF₂ n'ont pas influencé la formation du film de passivation. La capacité réversible du graphite est de 356 mAh/g, soit l'équivalent de x = 0,96 dans la formation LiₓC₆.

### Exemple 3

30 grammes d'un graphite naturel StratminGraphite (Lac des îles - Québec) sont traités de façon identique à celle décrite dans l'exemple 2 à l'exception de la concentration acide de HF qui, dans le bain aqueux, est maintenant de 20 %. L'analyse des impuretés de ce graphite par EDX montre la présence majoritaire des éléments Ca et F. L'analyse des cendres résiduelles des impuretés présentes dans et à la surface du graphite montre une pureté de 99,75%. La préparation de l'électrode et les tests électrochimiques sont identiques aux procédures décrites dans l'exemple 1.

L'efficacité coulombique du premier cycle est de 89%. Le plateau irréversible du film de passivation est formé normalement vers 800 mV. La capacité réversible du graphite est de 365 mAh/g et l'équivalent de x = 0,98 suivant la formation de LiₓC₆.

### Exemple 4

30 grammes d'un graphite naturel StraminGraphite (Lac des îles - Québec) sont traités de façon identique à celle décrite dans l'exemple 2, à l'exception de la concentration acide qui est maintenant, dans le bain aqueux, de 10 % en HF. La préparation de l'électrode et les tests électrochimiques sont identiques aux procédures décrites dans l'exemple 1.

L'efficacité coulombique du premier cycle est de 75%. La capacité irréversible de 106.7 mAh/g est très élevée comparée à celle du graphique de l'exemple 2 et 3, lixivié respectivement avec HF 30% et HF 20%. La capacité réversible est de 318 mAh/g et l'équivalent à x = 0,85 dans la formation de LiₓC₆.

### Exemple 5

30 grammes d'un graphite naturel StratminGraphite (Lac des îles - Québec) sont traités de façon identique à celle décrite dans l'exemple 2, à l'exception du mélange H₂SO₄-HF dans lequel HF est remplacé par NH₄F. La solution aqueuse de H₂SO₄ et NH₄F, comporte donc 30 % de H₂SO₄ et 30 % de NH₄F.

La teneur en mélange aqueux de (H₂SO₄ et NH₄F) représente, comme dans les exemples précédents, environ 3 fois la masse des granules de graphites traités.
Le traitement à l'aide de la solution acide est réalisé à 90 °C pendant 3 heures.

L'analyse des impuretés de ce graphite par EDX montre la présence majoritaire des éléments Ca et F. L'analyse des cendres résiduelles des impuretés sur ce graphite montre une pureté de 99,64%. La préparation de l'électrode et les tests électrochimiques sont identiques aux procédures décrites dans l'exemple 1.

L'efficacité coulombique du premier cycle est de 90%. La capacité irréversible du graphite est de 44 mAh/g. La capacité réversible est de 352 mAh/g équivalent à x = 0,96 suivant la formation LiₓC₆.

### Exemple 6

30 grammes d'un graphite naturel StratminGraphite (Lac des îles - Québec) constitué de particules ayant une grosseur de 10 µm sont lixiviés en deux étapes. En premier lieu, avec une solution aqueuse 30% HCl, puis avec une solution aqueuse à 30% HF. Pour chacune des lixiviations, 106,5 ml de la solution acide sont chauffés à 90°C, et 30 g de graphite sont alors ajoutés. Le graphite est lixivié pendant 180 minutes dans le réacteur. Le solide est filtré, lavé à grande eau, et séché à 120°C pendant 24 heures.

La taille (D50%) est de 10.02µm. La distribution gaussienne du graphite a un seul maximum sans aucun épaulement.

L'analyse des impuretés de ce graphite par EDX montre l'absence totale des éléments Si et Ca. L'élément majoritaire obtenu comme impureté est le soufre. Une analyse des cendres résiduelles des impuretés sur le graphite montre une pureté de 99,99 %. La préparation de l'électrode et les tests électrochimiques sont identiques aux procédures décrites à l'exemple 1.

L'efficacité coulombique du premier cycle est de 88%. Le plateau irréversible du film de passivation est formé normalement vers 800 mVolts. On peut donc en conclure que la présence du soufre n'a pas d'effets néfastes lors de la formation du film de passivation. La capacité réversible du graphite est de 357 mAh/g et l'équivalent de x = 0,96 dans la formulation LiₓC₆.

### Exemples de mise en oeuvre du procédé de purification selon la présente invention

Pour chaque essai, 150 g d'un graphite originaire du Brésil c'est-à-dire riche en impuretés (par quantité d'importance décroissante) du type Al, Si et Fe, sont placés dans un réacteur. La taille moyenne des particules de graphite (D50) est de 20 µm. La lixiviation se déroule sur 4 heures. Un échantillon de 50 g est prélevé après 1, 2 et 4 heures, pour voir l'évolution de la cinétique. Une analyse de cendres est alors complétée sur chaque échantillon. Les résultats de ces analyses sont présentés dans les paragraphes qui suivent.

Tout d'abord, une solution aqueuse comportant 1,5 % en poids de NH₄F et 15 % en poids de H₂SO₄ a été testée à différentes températures. Le pourcentage de solution aqueuse de NH₄F et de H₂SO₄ utilisée représente 20 % en poids de la masse de graphite traité. Les résultats sont présentés dans le tableau qui suit. Chaque échantillon analysé est identifié par un numéro d'essai.

| Essai | NH₄F | H₂SO₄ | T | | % cendres | | | |
|---|---|---|---|---|---|---|---|---|
| | (%) | (%) | (°C) | Temps | 0 h | 1 h | 2 h | 4 h |
| 1-3 | 1,5 | 15 | 20 | | 1,88 | 0,31 | 0,25 | 0,22 |
| 4-6 | 1,5 | 15 | 60 | | 1,88 | 0,08 | 0,05 | 0,03 |
| 7-9 | 1,5 | 15 | 90 | | 1,88 | 0,01 | 0,01 | 0,01 |

À 90 °C, la réaction est très rapide, même à des concentrations de NH₄F basses. On peut voir que la réaction est presque complète à 60 °C. En augmentant les concentrations en NH₄F, les résultats suivants ont été obtenus à 60 et 20 °C. On constate, de façon surprenante, que le niveau recherché pour la purification en surface des particules de graphite, c'est-à-dire un taux d'impuretés inférieur ou égal à 0,03 %, est atteint en procédant à une température inférieure à 90°C et qui est de préférence de l'ordre de 60 °C.

| Essai | NH₄F | H₂SO₄ | T | | % cendres | | | |
|---|---|---|---|---|---|---|---|---|
| | (%) | (%) | (°C) | Temps | 0 h | 1 h | 2 h | 4 h |
| 10-12 | 2,5 | 15 | 60 | | 1,88 | 0,09 | 0,06 | 0,02 |
| 13-15 | 15 | 15 | 20 | | 1,88 | 0,09 | 0,05 | 0,03 |
| 16-18 | 5 | 5 | 60 | | 1,88 | 0,08 | 0,06 | 0,05 |

En comparant les essais 12 et 18, tous les deux réalisés à 60 °C, il apparaît que la diminution de la concentration d'acide a un impact important. En effet, le % résiduel de cendres est plus élevé avec plus de NH₄F et moins de H₂SO₄. L'essai 15, à 20 °C, montre que, même avec une très forte concentration des deux réactifs, la réaction n'est toujours pas complète après 4 heures.

Il apparaît donc de façon surprenante que l'on obtient des performances particulièrement intéressantes en réalisant le traitement de purification avec de faibles quantités d'une solution aqueuse faiblement acide et à une température comprise entre la température ambiante et environ 60 °C.

Il apparaît également de façon surprenante que l'on peut diminuer très sensiblement la durée du traitement lorsque l'on travaille à des températures proches de 90 °C.

### Exemples de mise en oeuvre du procédé selon l'invention avec des particules de graphite de forme sphérique

### Exemple A

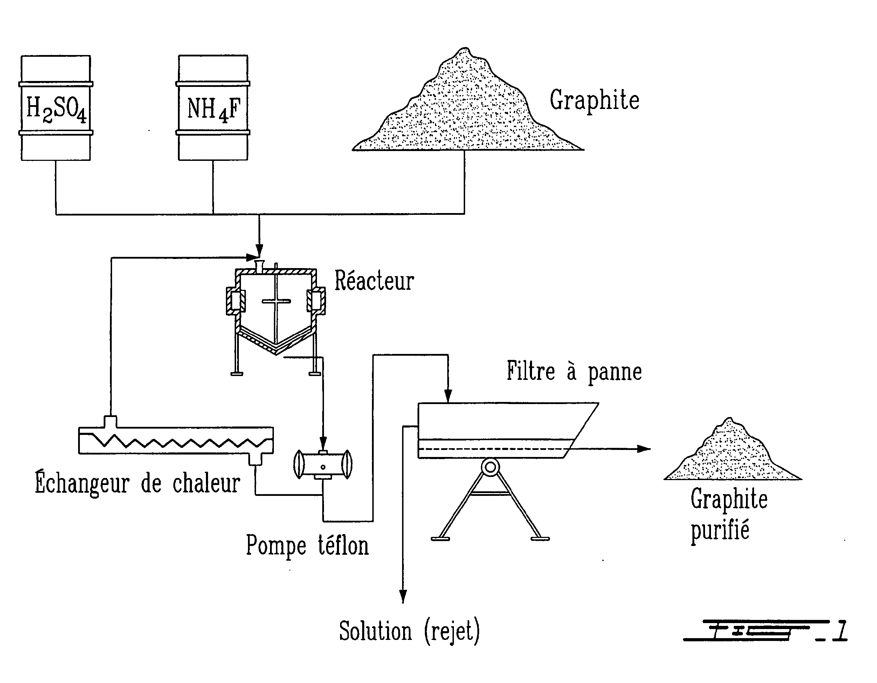

Le montage expérimental utilisé est représenté dans la Figure 1. Il comprend notamment un réacteur en polypropylène, un échangeur en graphite et une pompe en téflon. En raison de la présence du gaz toxique HF, des équipements spéciaux de sécurité sont utilisés, tels qu'un masque full-face avec cartouche pour le HF, un tablier, des bottes et des gants de caoutchouc.

On place tout d'abord 85,6 litres d'eau dans le réservoir, puis on ajoute 16,15 kg de H₂SO₄ (96 %). Si l'acide disponible n'est pas à 96 %, on ajuste le volume d'eau en conséquence pour obtenir une solution finale à 15 % en H₂SO₄. Par exemple, pour 15,8 kg d'un acide à 98 %, on ajoute 86 litres d'eau et pour 15,8 kg d'un acide à 93 % on ajoute 85,1 litres d'eau. L'ajout d'eau doit être réalisé lentement pour éviter une réaction trop violente.

Une quantité de 1,55kg de NH₄F est alors ajoutée dans l'acide sulfurique. On chauffe alors la solution à 90°C avec l'échangeur en graphite. Puis, 20 kilogrammes du graphite Chinois sphérique obtenu par Mechano-fusion (Hozokawa) et d'une taille de 12 µm, sont ajoutés dans la solution et le mélange obtenu est agité.

Le milieu opérationnel est maintenu à 90°C pendant 1 heure, puis la partie solide est filtrée et lavée avec une grande quantité d'eau. La solution récupérée est alors neutralisée avec de la chaux.

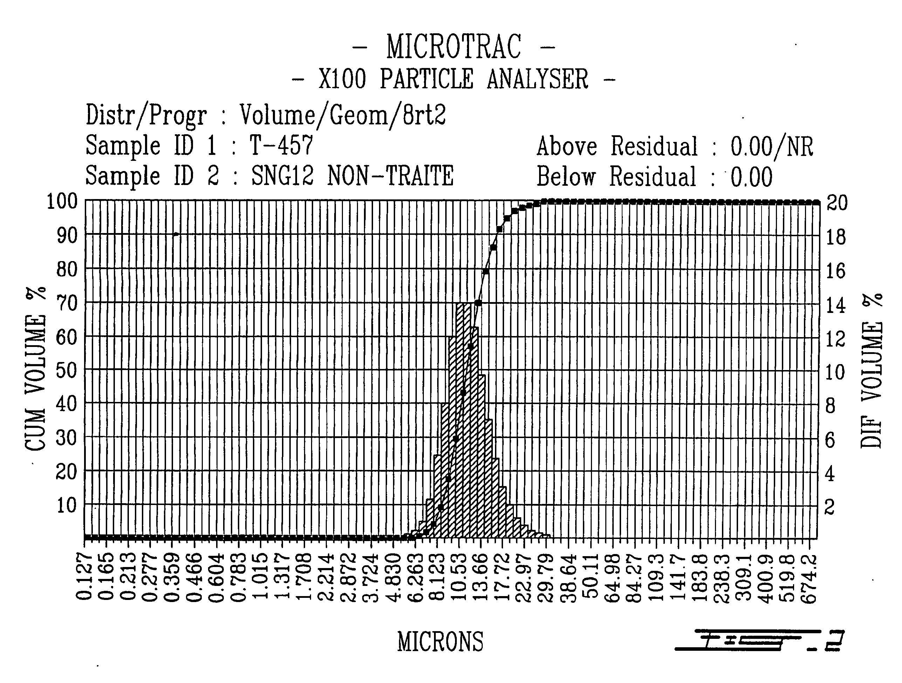

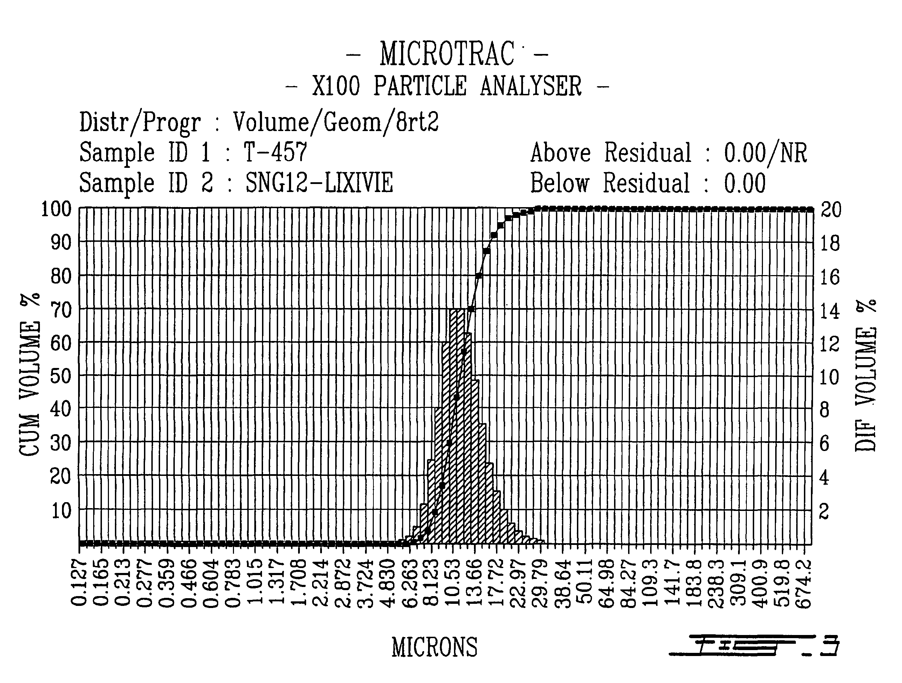

Comme le montre les résultats expérimentaux rapportés dans les Figures 2 et 3 jointes, la pureté totale des particules de graphite qui était avant traitement de 96,9 %, atteint après traitement selon le procédé de l'invention la valeur de 99,4%.

### Exemple B :

On utilise le même montage et les mêmes équipements de sécurité que dans l'exemple A. La même séquence opérationnelle est répétée avec un deuxième échantillon de 20 kg et avec des particules de graphite d'une taille de 20 µm obtenues par Mechano-fusion (Hozokawa).

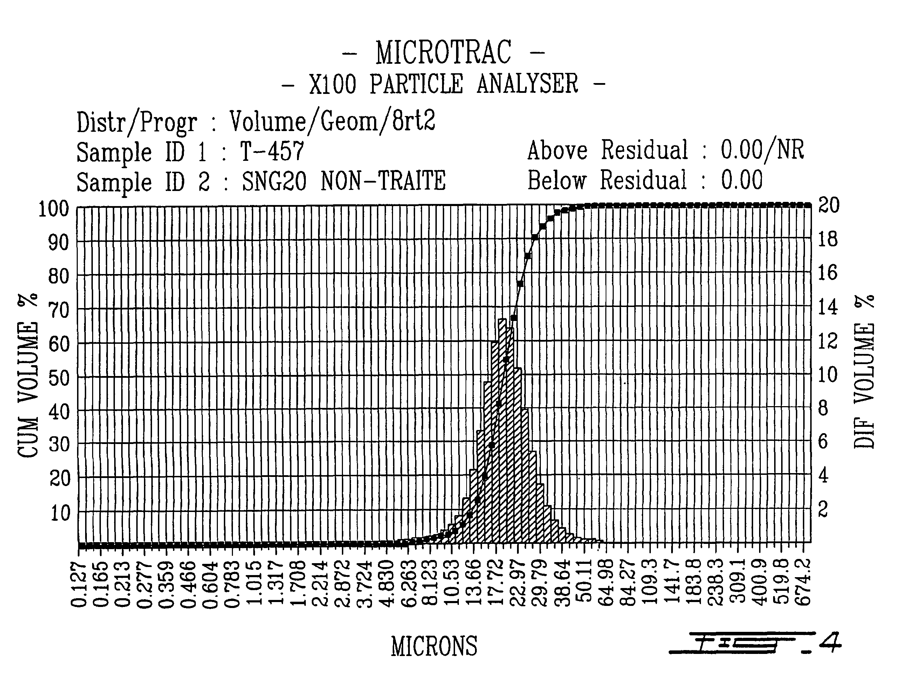

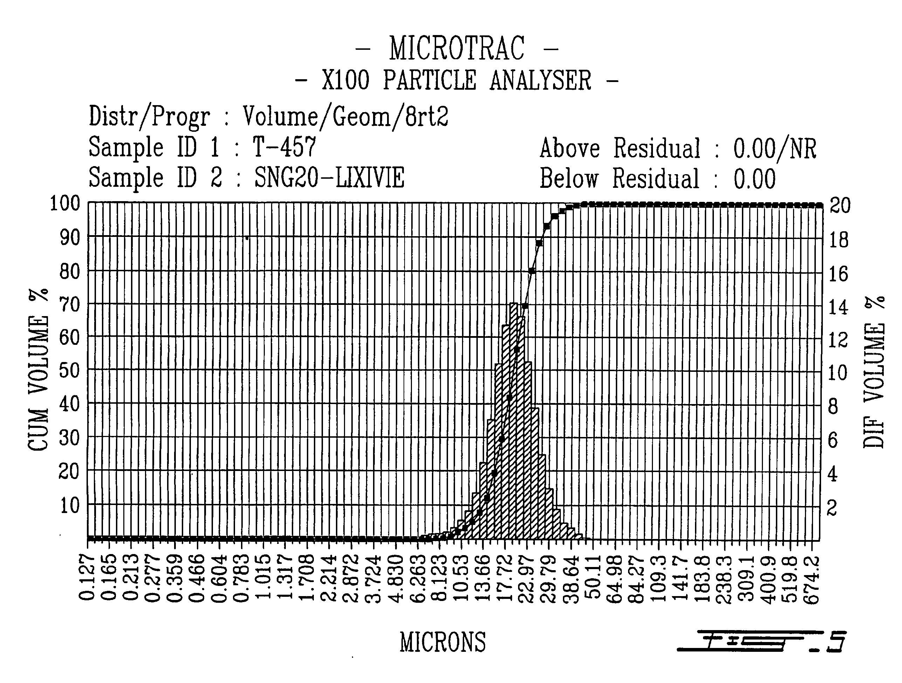

Comme le montre les résultats expérimentaux rapportés dans les Figures 4 et 5 jointes, la pureté totale des particules de graphite qui était avant traitement de 97 %, atteint après traitement selon le procédé de l'invention, la valeur de 99,1 %.

Bien que la présente invention ait été décrite à l'aide de mises en oeuvre spécifiques, il est entendu que plusieurs variations et modifications peuvent se greffer auxdites mises en oeuvre, et la présente demande vise à couvrir de telles modifications, usages ou adaptations de la présente invention suivant, en général, les principes de l'invention et incluant toute variation de la présente description qui deviendra connue ou conventionnelle dans le champ d'activité dans lequel se retrouve le présente invention, et qui peut s'appliquer aux éléments essentiels mentionnés ci-haut, en accord avec la portée des revendications suivantes.

## Revendications

1. Procédé de préparation de particules de graphite purifiées en surface à partir de particules de graphite comportant des impuretés, ledit procédé comportant au moins une étape de traitement des dites particules de graphite, à l'aide d'une solution aqueuse diluée de (H₂S0₄ et NH₄F), dans laquelle la teneur totale en poids de (H₂S0₄ et NH₄F) représente de 5 à 30 % de la masse totale de la solution aqueuse diluée et la quantité de solution aqueuse diluée de (H₂S0₄ et NH₄F) utilisée pour le traitement représente de 70 à 95 % en poids de la masse totale des particules de graphite soumises à purification.

2. Procédé selon la revendication 1, dans lequel les particules de graphite à purifier sont des particules d'un graphite naturel.

3. Procédé selon la revendication 1 ou 2, dans lequel les particules de graphite ont une taille se situant entre environ 1 et 375 µm.

4. Procédé selon la revendication 3, dans lequel la taille des particules de graphite à purifier est comprise entre 1 et 50 µm.

5. Procédé selon l'une quelconque des revendications 1 à 4, dans lequel l'étape de traitement des particules de graphite est réalisée à une température comprise entre la température ambiante et 95 °C.

6. Procédé selon la revendication 5, dans lequel le traitement est réalisé à une température comprise entre 40 et 90 °C.

7. Procédé selon la revendication 6, dans lequel le traitement des particules de graphite est réalisé à une température d'environ 60 °C.

8. Procédé selon l'une quelconque des revendications 1 à 7, dans lequel le traitement des particules de graphite est réalisé pendant une durée de 5 minutes à 6 heures.

9. Procédé selon la revendication 8, dans lequel le traitement des particules de graphite est réalisé pendant une durée de 10 minutes à 4 heures.

10. Procédé selon l'une quelconque des revendications 1 à 9, dans lequel la quantité de solution aqueuse diluée utilisée dans l'étape de traitement représente de 80 à 90 % du poids total des particules de graphite soumises à purification.

11. Procédé selon l'une quelconque des revendications 1 à 10 réalisé dans un réacteur, en présence d'une agitation mécanique.

12. Procédé selon la revendication 11, dans lequel l'agitation mécanique est de type planetary mixer.

13. Procédé selon l'une quelconque des revendications 1 à 12, dans lequel la solution aqueuse diluée de (H₂SO₄ et NH₄F) est introduite dans le milieu réactionnel en même temps que les particules de graphite soumises à purification.

14. Procédé selon la revendication 1, **caractérisé en ce qu'**il comprend :
- a) une étape de préparation d'un mélange réactionnel contenant lesdites particules de graphite impur, du NH₄F, du H₂SO₄ et de l'eau, le mélange (H₂SO₄ et NH₄F) étant présent dans la solution aqueuse diluée formée à une teneur en poids de 5 à 30% et la quantité de solution aqueuse diluée représente de 70 à 95% du poids total desdites particules de graphite;
- b) au moins une étape de traitement du mélange préparé dans l'étape a) à une température comprise entre la température ambiante et 95 °C, pendant une durée de 5 minutes à 6 heures, à l'aide de la solution aqueuse diluée de (H₂SO₄ et NH₄F);
- c) une étape de séparation, de préférence par filtration, de la phase liquide et de la phase solide contenues dans le mélange traité obtenu dans l'étape b);
- d) une étape de lavage, à l'aide d'un solvant, de la phase solide récupérée dans l'étape c); et
- e) une étape d'élimination des impuretés extraites de la surface du graphite et présentes dans la phase liquide récupérée dans l'étape c) et/ou des impuretés présentes dans la solution de lavage récupérée dans l'étape d).

15. Procédé selon la revendication 14 comportant une étape additionnelle de recyclage de la phase liquide purifiée récupérée dans l'étape e), dans l'étape a) et/ou dans l'étape b) dudit procédé.

16. Procédé selon la revendication 14 ou 15, pour la préparation de particules de graphite naturel purifiées en surface.

17. Procédé selon l'une quelconque des revendications 14 à 16, dans lequel les particules de graphite à purifier ont une taille se situant entre environ 1 et 375 µm.

18. Procédé selon la revendication 17, dans lequel les particules de graphite à purifier ont une taille comprise entre 1 et 50 µm.

19. Procédé selon l'une quelconque des revendications 14 à 18, dans lequel l'étape a) est réalisée à température ambiante et sous agitation mécanique.

20. Procédé selon l'une quelconque des revendications 14 à 19, dans lequel la quantité de solution aqueuse acide diluée (H₂SO₄ et NH₄F) ajoutée dans l'étape a) représente de 80 à 90 % du poids total desdites particules de graphite.

21. Procédé selon l'une quelconque des revendications 14 à 20, dans lequel le traitement du mélange préparé dans l'étape a) est réalisé à une température comprise entre la température ambiante et 95 °C.

22. Procédé selon l'une quelconque des revendications 14 à 21, dans lequel l'étape a) et/ou l'étape b) est (sont) d'une durée de 5 minutes à 6 heures.

23. Procédé selon la revendication 22, dans lequel la durée est de 10 minutes à 4 heures.

24. Procédé selon l'une quelconque des revendications 14 à 23, dans lequel l'étape b) est réalisée en présence d'une agitation mécanique.

25. Procédé selon l'une quelconque des revendications 14 à 24, dans lequel le solvant, utilisé dans l'étape d) de lavage de la phase solide, est l'eau.

26. Procédé selon l'une quelconque des revendications 14 à 25, dans lequel la phase liquide purifiée récupérée dans l'étape a) est enrichie en H₂SO₄ et en NH₄F dans l'étape a) et/ou dans l'étape b) dudit procédé, avant recyclage.

27. Procédé selon l'une quelconque des revendications 1 à 26, dans lequel les particules de graphite soumises à purification ont été obtenues par broyage d'un graphite jusqu'à l'obtention de particules d'une taille se situant entre environ 1 et 50 µm.

28. Procédé selon l'une quelconque des revendications 1 à 27, comprenant au moins une des caractéristiques suivantes: - la solution aqueuse diluée de (H₂SO₄ et NH₄F) utilisée comprend de 5 à 30 % de H₂SO₄ et de 5 à 30 % de NH₄F; - la solution aqueuse diluée de (H₂SO₄ et NH₄F) utilisée est ajoutée au début du traitement de purification, sous agitation mécanique; - le mélange résiduaire acide est neutralisé de préférence in situ par utilisation de NaOH ou par dilution complète à l'aide de H₂0; et - la température est maintenue constante durant toute la durée de mise en oeuvre dudit procédé.

29. Procédé selon l'une quelconque des revendication 1 à 28, **caractérisé en ce que** la structure cristallographique du graphite est inchangé avant et après lixiviation comme l'atteste un contrôle des paramètres cristallographiques L_{c} et Lₐ du graphite réalisé respectivement par diffraction X et/ou par spectroscopie Raman.

30. Procédé selon l'une quelconque des revendications 1 à 29, **caractérisé en ce que** le graphite est choisi dans le groupe constitué par les graphites de type Stratrnin Graphite (Canada) riches en calcium, les graphites de type chinois riches en silicium, les graphites de type Lac Knife (Canada) riches en soufre, les graphites de type brésilien riches en impuretés de type fer et par toute source naturelle de graphite disponible.

31. Procédé selon l'une quelconque des revendications 2 à 30, **caractérisé en ce que** les étapes (a) et (b) sont effectuées dans des conditions propres à donner des particules de graphite ayant au moins une des propriétés additionnelles suivantes:
- une distance interplanaire d₀₀₂ mesurée par Rayons-X, variant entre 3,35Å et 3,38Å, les bornes étant comprises;
- une surface spécifique variant entre 0,4 et 55 m²/g, les bornes étant comprises; et
- un taux de pureté mesuré par rétrodiffusion avec les électrons secondaires variant entre 98,5% et 99,99%, les bornes étant comprises.

32. Procédé selon l'une quelconque des revendications 1 à 31, **caractérisé en ce que** la purification est effectuée dans un bain, de préférence dans un bain aqueux.

33. Procédé selon l'une quelconque des revendications 1 à 32, **caractérisé en ce que** les particules de graphite purifiées obtenues au cours dudit procédé sont, dans une étape supplémentaire, conditionnées sous forme d'une anode de carbone pour générateur électrochimique rechargeable comprenant un métal alcalin ou alcalino-terreux.

34. Procédé selon la revendication 33, **caractérisé en ce que** le métal est le lithium.

35. Procédé selon la revendication 33 ou 34, **caractérisé en ce que** l'on prépare l'anode en mélangeant les particules de graphite avec un liant et avec un solvant, et qu'on épand le mélange obtenu sur un collecteur métallique.

36. Procédé selon l'une quelconque des revendications 1 à 35, **caractérisé en ce que** la purification s'effectue de façon à éliminer lesdites impuretés et les sites de corrosion, en surface seulement.

37. Procédé selon l'une quelconque des revendications 1 à 36, dans lequel un acide oxydant est ajouté dans le milieu réactionnel pour obtenir, en une seule étape, du graphite exfolié et purifié en surface.

38. Procédé selon la revendication 37, dans lequel l'acide oxydant est de type NHO₃.

39. Procédé selon l'une quelconque des revendications 1 à 38, dans lequel H₂SO₄ est présent dans la solution aqueuse diluée (H₂SO₄ et NH₄F) à raison d'au moins 80 % en poids de la masse totale de (H₂SO₄ et NH₄F) et NH₄F est présent dans la solution aqueuse diluée de (H₂SO₄ et NH₄F) à raison d'au plus 20 % en poids de la masse totale de (H₂SO₄ et NH₄F).

40. Procédé selon l'une quelconque des revendications 1 à 39 dans lequel au cours du traitement le gradient de température /temps est compris entre 10 et 90°C par heure.

## Claims

1. Process for preparing graphite particles that are purified in surface, from graphite particles that contain impurities, said process including at least one step of treating said graphite particles, by means of a diluted aqueous solution of (H₂SO₄ and NH₄F), wherein the total weight of (H₂SO₄ and NH₄F) represents 5 to 30% of the total weight of the diluted aqueous solution, and the quantity of diluted aqueous solution of (H₂SO₄ and NH₄F) used for the treatment represents 70 to 95% by weight of the total weight of the graphite particles that are subjected to purification.

2. Process according to claim 1, in which the graphite particles to be purified are particles of a natural graphite.

3. Process according to claim 1 or 2, in which the graphite particles have a size between 1 and 375 µm.

4. Process according to claim 3, in which the size of the graphite particles to be purified is between 1 and 50 µm.

5. Process according to any of claims 1 to 4, in which the step of treating graphite particles is carried out at a temperature between room temperature and 95°C.

6. Process according to claim 5, in which the treatment is carried at a temperature between 40 and 90°C.

7. Process according to claim 6, in which the treatment of the graphite particles is carried out at a temperature of about 60°C.

8. Process according to any of claim 1 to 7, in which the treatment of the graphite particles is carried out for a period of 5 minutes to 6 hours.

9. Process according to claim 8, in which the treatment of the graphite particles is carried out for a period of 10 minutes to 4 hours.

10. Process according to any of claims 1 to 9, in which the quantity of diluted aqueous solution in the treatment step represents from 80 to 90% of the total weight of the graphite particles that are subjected to purification.

11. Process according to to any of claims 1 to 10, carried out in a reactor, in the presence of mechanical stirring.

12. Process according to claim 11, in which the mechanical stirring is of the planetary mixer type.

13. Process according to any of claims 1 to 12, in which the diluted aqueous solution of (H₂SO₄ and NH₄F) is introduced into the reaction mixture at the same time as the graphite particles that are subjected to purification.

14. Process according to claim 1, **characterized in that** it comprises :
a) a step of preparing a reaction mixture containing said particles of impure graphite, H₂SO₄ and NH₄F and water, the H₂SO₄ and NH₄F mixture being present in the diluted aqueous solution that is formed, at a weight content of 5 to 30%, and the quantity of diluted aqueous solution representing from 70 to 95% by weight of the total weight of said graphite particles;
b) at least one step of treating the mixture prepared in step a) at a temperature between room temperature and 95°C., for a period of 5 minutes to 6 hours, by means of the diluted aqueous solution of (H₂SO₄ and NH₄F);
c) a step of separation, preferably by filtration, of the liquid phase and the solid phase that are present in the treated mixture obtained in step b);
d) a step of washing the solid phase that is recovered in step c), by means of a solvent;
e) a step of removing the impurities that are extracted from the surface of graphite and that are found in the liquid phase recovered in step c) and/or in the impurities that are present in the washing solution that is recovered in step d).

15. Process according to claim 14 including an additional step of recycling the purified liquid phase that is recovered in step e), in step a) and/or in step b) of said process.

16. Process according to claim 14 or 15, for the preparation of particles of natural graphite that are purified at the surface.

17. Process according to any of claims 14 to 16, in which the graphite particles to be purified have a size between about 1 and 375 µm.

18. Process according to claim 17, in which the graphite particles to be purified have a size between 1 and 50 µm.

19. Process according to any of claims 14 to 18, in which step a) is carried out at room temperature and under mechanical stirring.

20. Process according to any of claims 14 to 19, in which the quantity of diluted aqueous solution (H₂SO₄ and NH₄F) that is added during step a) represents 80 to 90% of the total weight of said graphite particles.

21. Process according to any of claims 14 to 20, in which the treatment of the mixture prepared during step a) is carried out at a temperature between room temperature and 95°C.

22. Process according to any of claims 14 to 21, in which step a) and/ or step b) last(s) from 5 minutes to 6 hours.

23. Process according to claim 22, in which the duration is from 10 minutes to 4 hours.

24. Process according to any of claims 14 to 23, in which step b) is carried out in the presence of mechanical stirring.

25. Process according to any of claims 14 to 24, in which the solvent, used in step d) for washing the solid phase, is water.

26. Process according to any of claims 14 to 25, in which the purified liquid phase that is recovered in step a) is enriched in H₂SO₄ and in NH₄F, in step a) and/or in step b) of said process, before recycling.

27. Process according to any of claims 1 to 26, in which the graphite particles that are subject to purification were obtained by crushing a graphite until obtaining particles of a size between about 1 and 50 µm.

28. Process according to any of claims 1 to 27, comprising at least one of the following characteristics: - the diluted aqueous solution of (H₂SO₄ and NH₄F) used comprises from 5 to 30% of H₂SO₄ and from 5 to 30% of NH₄F); - the diluted aqueous solution of (H₂SO₄ and NH₄F) used is added at the start of the purification treatment, under mechanical stirring; - the residual acid mixture is neutralized preferably in situ with NaOH or by complete dilution with H₂O; and - the temperature is kept constant during the entire duration of the process.

29. Process according to any of claims 1 to 28, **characterized in that** the crystallographic structure of the graphite is unchanged before and after leaching as shown by a control of the crystallographic parameters L.sub.c and L.sub.z of the graphite carried out respectively by X ray diffraction and/or by Raman spectroscopy.

30. Process according to any of claims 1 to 29, **characterized in that** the graphite is selected from the group consisting of a StratminGraphite (Canada) type rich in calcium, graphites of the Chinese type rich in silicon, a graphite of Lake Knife (Canada) rich in sulfur, graphites of the Brazilian type rich in impurities of the iron type and any available graphite from a natural source.

31. Process according to any of claims 2 to 30, wherein steps (a) and (b) are carried out under conditions suitable to give graphite particles having at least one of the following additional properties :
- an interplanar distance d₀₀₂ obtained by X-ray that varies between 3.35 Å and 3.38 Å, all included;
- a specific surface that varies between 0.4 and 55 m²/g, all included; and
- a coefficient of surface purity measured backscattering with the secondary electrons that varies between 98.5% and 99.99%, all included.

32. Process according to any of claims 1 to 31, **characterized in that** the purification is carried out in a bath, preferably in an aqueous bath.

33. Process according to any of claims 1 to 32, **characterized in that** the purified graphite particles obtained in the course of said process are, in a supplementary step, conditioned in the form of a carbon anode for rechargeable electrochemical generator comprising an alkaline or alkaline-earth metal.

34. Process according to claim 33, **characterized in that** the metal is lithium.

35. Process according to claim 33 or 34, **characterized in that** an anode is prepared by mixing the graphite particles with a binder and a solvent, and the mixture thus obtained is spread on a metallic collector.

36. Process according to any of claims 1 to 35, **characterized in that** purification is carried out so that said impurities and corrosion sites are eliminated only at the surface.

37. Process according to any of claims 1 to 36, in which an oxidizing acid is added to the reaction mixture to obtain, in one single step, expanded graphite purified at the surface.

38. Process according to claim 37, in which the oxidizing acid is NHO₃.

39. Process according to any of claims 1 to 38, in which H₂SO₄ is present in the diluted aqueous solution of (H₂SO₄ and NH₄F) at a rate of at least 80 % of the total weight of (H₂SO₄ and NH₄F) and NH₄F is present in the diluted aqueous solution of (H₂SO₄ and NH₄F) at a rate of at most 20 % of the total weight of (H₂SO₄ and NH₄F).

40. Process according to any of claims 1 to 39, in which the the temperature /time gradient during treatment is between 10 and 90° per hour.

## Patentansprüche

1. Verfahren zur Herstellung oberflächengereinigter Graphitteilchen, ausgehend von Graphitteilchen, die Verunreinigungen umfassen, wobei das Verfahren zumindest einen Schritt der Behandlung der Graphitteilchen unter Verwendung einer verdünnten wässrigen Lösung von (H₂SO₄ und NH₄F) umfasst, worin der Gesamtgewichtsanteil an (H₂SO₄ und NH₄F) 5 bis 30 % des Gesamtgewichts der verdünnten wässrigen Lösung beträgt und die für die Behandlung eingesetzte Menge der verdünnten wässrigen Lösung von (H₂SO₄ und NH₄F) 70 bis 95 Gew.-% des Gesamtgewichts der der Reinigung unterzogenen Graphitteilchen beträgt.

2. Verfahren nach Anspruch 1, worin die zu reinigenden Graphitteilchen natürliche Graphitteilchen sind.

3. Verfahren nach Anspruch 1 oder 2, worin die Graphitteilchen eine Größe zwischen etwa 1 und 375 µm aufweisen.

4. Verfahren nach Anspruch 3, worin die Größe der zu reinigenden Graphitteilchen zwischen 1 und 50 µm liegt.

5. Verfahren nach einem der Ansprüche 1 bis 4, worin der Schritt der Behandlung der Graphitteilchen bei einer Temperatur zwischen Raumtemperatur und 95 °C durchgeführt wird.

6. Verfahren nach Anspruch 5, worin die Behandlung bei einer Temperatur zwischen 40 und 90 °C durchgeführt wird.

7. Verfahren nach Anspruch 6, worin die Behandlung der Graphitteilchen bei einer Temperatur von etwa 60 °C erfolgt.

8. Verfahren nach einem der Ansprüche 1 bis 7, worin die Behandlung der Graphitteilchen in einem Zeitraum von 5 min bis 6 h erfolgt.

9. Verfahren nach Anspruch 8, worin die Behandlung der Graphitteilchen in einem Zeitraum von 10 min bis 4 h erfolgt.

10. Verfahren nach einem der Ansprüche 1 bis 9, worin die Menge der im Behandlungsschritt eingesetzten verdünnten wässrigen Lösung 80 bis 90 % des Gesamtgewichts der der Reinigung unterzogenen Graphitteilchen beträgt.

11. Verfahren nach einem der Ansprüche 1 bis 10, das in einem Reaktor unter mechanischem Rühren durchgeführt wird.

12. Verfahren nach Anspruch 11, worin das mechanische Rühren mittels eines Planetenmischers erfolgt.

13. Verfahren nach einem der Ansprüche 1 bis 12, worin die verdünnte wässrige Lösung von (H₂SO₄ und NH₄F) gleichzeitig mit den der Reinigung unterzogenen Graphitteilchen in das Reaktionsmedium eingeführt wird.

14. Verfahren nach Anspruch 1, **dadurch gekennzeichnet, dass** es Folgendes umfasst:
a) einen Schritt der Herstellung eines Reaktionsgemischs, das die verunreinigten Graphitteilchen, NH₄F, H₂SO₄ und Wasser enthält, wobei das Gemisch aus (H₂SO₄ und NH₄F) in der hergestellten verdünnten wässrigen Lösung in einem Gewichtsanteil von 5 bis 30 % vorhanden ist und die Menge der verdünnten wässrigen Lösung 70 bis 95 % des Gesamtgewichts der Graphitteilchen ausmacht;
b) zumindest einen Schritt der Behandlung des in Schritt a) hergestellten Gemischs bei einer Temperatur zwischen Raumtemperatur und 95 °C über einen Zeitraum von 5 min bis 6 h unter Verwendung der verdünnten wässrigen Lösung von (H₂SO₄ und NH₄F);
c) einen Schritt der Trennung der flüssigen Phase und der festen Phase, die in dem in Schritt b) erhaltenen behandelten Gemisch enthalten sind, vorzugsweise mittels Filtration;
d) einen Schritt des Waschens der in Schritt c) gewonnenen festen Phase unter Verwendung eines Lösungsmittels; und
e) einen Schritt der Entfernung der von der Oberfläche des Graphits extrahierten und in der in Schritt c) gewonnenen flüssigen Phase vorhandenen Verunreinigungen und/oder der in der in Schritt d) gewonnenen Waschlösung vorhandenen Verunreinigungen.

15. Verfahren nach Anspruch 14, umfassend einen zusätzlichen Schritt der Rezyklierung der in Schritt e), in Schritt a) und/oder Schritt b) des Verfahrens gewonnenen, gereinigten flüssigen Phase.

16. Verfahren nach Anspruch 14 oder 15 zur Herstellung oberflächengereinigter natürlicher Graphitteilchen.

17. Verfahren nach einem der Ansprüche 14 bis 16, worin die zu reinigenden Graphitteilchen eine Größe zwischen etwa 1 und 375 µm aufweisen.

18. Verfahren nach Anspruch 17, worin die zu reinigenden Graphitteilchen eine Größe zwischen 1 und 50 µm aufweisen.

19. Verfahren nach einem der Ansprüche 14 bis 18, worin Schritt a) bei Raumtemperatur und unter mechanischem Rühren durchgeführt wird.

20. Verfahren nach einem der Ansprüche 14 bis 19, worin die Menge der verdünnten wässrigen sauren Lösung von (H₂SO₄ und NH₄F), die in Schritt a) zugesetzt wird, 80 bis 90 % des Gesamtgewichts der Graphitteilchen entspricht.

21. Verfahren nach einem der Ansprüche 14 bis 20, worin die Behandlung des in Schritt a) hergestellten Gemischs bei einer Temperatur zwischen Raumtemperatur und 95 °C durchgeführt wird.

22. Verfahren nach einem der Ansprüche 14 bis 21, worin Schritt a) und/oder Schritt b) 5 min bis 6 h dauert/dauern.

23. Verfahren nach Anspruch 22, worin die Dauer 10 min bis 4 h beträgt.

24. Verfahren nach einem der Ansprüche 14 bis 23, worin Schritt b) unter mechanischem Rühren durchgeführt wird.

25. Verfahren nach einem der Ansprüche 14 bis 24, worin das in Schritt d) des Waschens der festen Phase eingesetzte Lösungsmittel Wasser ist.

26. Verfahren nach einem der Ansprüche 14 bis 25, worin die in Schritt a) gewonnene, gereinigte flüssige Phase in Schritt a) und/oder Schritt b) des Verfahrens vor der Rezyklierung mit H₂SO₄ und NH₄F angereichert wird.

27. Verfahren nach einem der Ansprüche 1 bis 26, worin die der Reinigung unterzogenen Graphitteilchen **dadurch** erhalten wurden, dass Graphit bis zum Erhalt von Teilchen mit einer Größe zwischen etwa 1 und 50 µm zerkleinert wurde.

28. Verfahren nach einem der Ansprüche 1 bis 17, das zumindest eines der folgenden Merkmale aufweist:
- die eingesetzte verdünnte wässrige Lösung von (H₂SO₄ und NH₄F) umfasst 5 bis 30 % H₂SO₄ und 5 bis 30 % NH₄F;
- die eingesetzte verdünnte wässrige Lösung von (H₂SO₄ und NH₄F) wird zu Beginn der Reinigungsbehandlung unter mechanischem Rühren zugesetzt;
- das saure Restgemisch wird vorzugsweise in situ unter Verwendung von NaOH oder durch vollständige Verdünnung mit H₂O neutralisiert; und
- die Temperatur wird während der gesamten Durchführungsdauer des Verfahrens konstant gehalten.

29. Verfahren nach einem der Ansprüche 1 bis 28, **dadurch gekennzeichnet, dass** die kristallographische Struktur des Graphits vor und nach dem Laugen unverändert ist, was durch eine mittels Röntgenbeugung und/oder Raman-Spektroskopie durchgeführte Überprüfung der kristallographischen Parameter L_{c} und Lₐ des Graphits bestätigt wird.

30. Verfahren nach einem der Ansprüche 1 bis 29, **dadurch gekennzeichnet, dass** der Graphit aus der aus Folgendem bestehenden Gruppe ausgewählt wird: calciumreichen Graphiten vom Typ Stratmin Graphite (Kanada); siliciumreichen Graphiten vom chinesischen Typ; schwefelreichen Graphiten vom Typ Lac Knife (Kanada); Graphiten vom brasilianischen Typ, die reich an Verunreinigungen vom Eisen-Typ sind; und Graphiten aus allen verfügbaren natürlichen Graphitquellen.

31. Verfahren nach einem der Ansprüche 2 bis 30, **dadurch gekennzeichnet, dass** die Schritte a) und b) unter Bedingungen durchgeführt werden, die geeignet sind, um Graphitteilchen zu ergeben, die zumindest eines der folgenden zusätzlichen Merkmale aufweisen:
- einen mittels Röntgenstrahlen ermittelten Gitterebenenabstand d₀₀₂ zwischen 3,35 und 3,38 Å (Grenzen eingeschlossen);
- eine spezifische Oberfläche zwischen 0,4 und 55 m²/g (Grenzen eingeschlossen);
- einen mittels Rückstreuung mit Sekundärelektronen gemessenen Reinheitsgrad zwischen 98,5 und 99,99 % (Grenzen eingeschlossen).

32. Verfahren nach einem der Ansprüche 1 bis 31, **dadurch gekennzeichnet, dass** die Reinigung in einem Bad erfolgt, vorzugsweise in einem wässrigen Bad.

33. Verfahren nach einem der Ansprüche 1 bis 32, **dadurch gekennzeichnet, dass** die im Verlauf des Verfahrens erhaltenen gereinigten Graphitteilchen in einem zusätzlichen Schritt in Form einer Kohlenstoffanode für eine wiederaufladbare elektrochemische Zelle, die ein Alkali- oder Erdalkalimetall umfasst, aufbereitet werden.

34. Verfahren nach Anspruch 33, **dadurch gekennzeichnet, dass** das Metall Lithium ist.

35. Verfahren nach Anspruch 33 oder 34, **dadurch gekennzeichnet, dass** die Anode durch Vermischen der Graphitteilchen mit einem Bindemittel und einem Lösungsmittel und Verteilen des erhaltenen Gemischs auf einem Metallkollektor hergestellt wird.

36. Verfahren nach einem der Ansprüche 1 bis 35, **dadurch gekennzeichnet, dass** die Reinigung so erfolgt, dass die Verunreinigungen und Korrosionsstellen nur auf der Oberfläche entfernt werden.

37. Verfahren nach einem der Ansprüche 1 bis 36, worin eine oxidierende Säure zum Reaktionsmedium zugesetzt wird, um in einem einzigen Schritt delaminierten und oberflächengereinigten Graphit zu erhalten.

38. Verfahren nach Anspruch 37, worin die oxidierende Säure vom HNO₃-Typ ist.

39. Verfahren nach einem der Ansprüche 1 bis 38, worin H₂SO₄ in der verdünnten wässrigen Lösung von (H₂SO₄ und NH₄F) in einer Menge von zumindest 80 Gew.-% des Gesamtgewichts von (H₂SO₄ und NH₄F) vorhanden ist und NH₄F in der verdünnten wässrigen Lösung von (H₂SO₄ und NH₄F) in einer Menge von maximal 20 Gew.-% des Gesamtgewichts von (H₂SO₄ und NH₄F) vorhanden ist.

40. Verfahren nach einem der Ansprüche 1 bis 39, worin im Verlauf der Behandlung der Gradient von Temperatur/Zeit zwischen 10 und 90 °C pro Stunde liegt.
